# EUROPEAN PATENT APPLICATION

(11) **EP 1 312 258 A1**
(43) Date of publication of application: **21.05.2003**
(21) Application number: 01956935.9
(22) Date of filing: 17.08.2001
(51) Int. Cl.: A01K 15/00, H04R 1/00

(54) **METHOD AND DEVICE FOR COMMUNICATION WITH ANIMAL**

(30) Priority: 21.08.2000 JP 2000249549
(71) Applicant: Temco Japan Co., Ltd., Tokyo 168-0062 (JP)
(72) Inventor: TAKEDA, Takeshi, TEMCO JAPAN CO., LTD., Tokyo 168-0062 (JP)
(74) Representative: Rémont, Claude
(86) International application number: JP0107076
(87) International publication number: WO02015678

(57) **Abstract**

A bone conduction speaker and a radio set having at least a receiving function are mounted on an animal such as a police dog or a rescue dog. This enables an animal trainer to have his or her instructions transferred to the animal even when the animal goes out of the range of the trainer's voice and/or encounters a very noisy environment in tracking, searching and like operations. The bone conduction speaker and the radio set both mounted on the animal are combined with each other to realize a method and apparatus for communication with the animal without fail. The method and the apparatus enable the trainer to transmit the instructions to the animal through the bone conduction speaker, so that the animal can perform an adequate action. Preferably, other instruments such as a microphone, a loudspeaker and a camera are additionally mounted on the animal.

## Description

### BACKGROUND OF THE INVENTION

### 1. Field of the Invention

The present invention relates to a method and apparatus for communicating or telecommunicating with an animal such as a dog, a horse, a dolphin and like intelligent animal capable of being trained as a police dog, a rescue dog and the like, to which a person such as a dog trainer and the like issues his or her instruction through telecommunication means.

### 2. Description of the Related Art

Dogs, cats, apes, monkeys, horses, dolphins and like intelligent animals frequently contact with man, and therefore are very often spoken to by him. Due to this, they are, if trained, capable of understanding many instructions issued from man in language or voice tone form. Each of these animals may serve as not only man's pets but also as man's partners in various kinds of work. For example, the dog may serves very effectively as a police dog for tracking a fugitive criminal and a search dog for finding out a victim or missing in disaster site, for example.

On the other hand, the instruction issued from man to the animal is prepared by using man's voice. Due to this, there is a fear that the animal goes out of the range of man's voice and/or encounters a very noisy environment in its tracking, searching and like work. In this case, it is impossible for the animal to perform its required work in cooperation with man according to his instruction. Further, there is a fear that man such as a policeman can't grasp the current conditions of the animal in the site in a precise manner when the animal such a police dog finds out and reaches the criminal in the site in a street or in a building complicated in passage.

As described, the instruction issued from man to the animal is effective only when the animal stays within the range of man's voice and does not encounter such a very noisy environment during its tracking, searching and like work. For example, there is a fear that the animal goes out of the range of man's voice and/or encounters such a very noisy environment in its tracking, searching and like work. This makes it impossible for the side of the animal to perform its required work in cooperation with man in accordance with the man's instruction, and further makes it impossible for the side of man to identify the animal's location.

### SUMMARY OF THE INVENTION

Consequently, it is an object of the present invention to provide a method and apparatus for communicating or telecommunicating with an animal, wherein man may transfer his instruction to the animal without fail, so that the animal performs necessary work in accordance with such instruction even when the animal encounters the above-mentioned adverse situation.

It is another object of the present invention to provide a method and apparatus for communicating or telecommunicating with an animal, wherein it is possible for man to identify the animal's location and issue an instruction to the animal such as a police dog or a rescue dog without fail, even when the animal is invisible to his naked eyes.

In accordance with a first aspect of the present invention, the above object of the present invention is accomplished by providing:

A method for communicating with an animal comprising the steps of:
mounting a bone conduction speaker on an animal together with a radio set having at least a receiving function; and
transferring an instruction to the animal through the bone conduction speaker.

In this method, preferably, a microphone is additionally mounted on the animal.

Further, preferably, a loudspeaker is additionally mounted on the animal.

Still further, preferably, a camera is additionally mounted on the animal.

In accordance with a second aspect of the present invention, the above object of the present invention is accomplished by providing:

An apparatus for communicating with an animal comprising:
a bone conduction speaker mounted on an animal;
a first radio set mounted on the animal together with the bone conduction speaker, the first radio set having at least a receiving function;
a second radio set carried by a person, the second radio set having at least a transmitting function.

Preferably, the apparatus further comprises a microphone additionally mounted on the animal.

Further, preferably, the apparatus further comprises a loudspeaker additionally mounted on the animal.

Still further, preferably, the apparatus further comprises a camera additionally mounted on the animal.

More specifically, a method for communicating with an animal comprises the steps of:
receiving an instruction signal through a first radio set at the side of an animal to be controlled, the first radio set having at least a receiving function for receiving the instruction signal, wherein both the bone conduction speaker and the first radio are mounted on the animal; and
supplying the instruction signal from an animal operator through a second radio set having at least a transmitting function for transmitting the instruction signal to the first radio set, wherein the first radio set is wire-connected or wireless-connected with the bone conduction speaker to further supply the instruction signal to the animal through the bone conduction speaker.

Preferably, a microphone is additionally mounted on the animal, the microphone being wire-connected or wireless-connected with the first radio set.

Preferably, a loudspeaker is additionally mounted on the animal, the loudspeaker being wire-connected or wireless-connected with the first radio set.

Preferably, a camera is additionally mounted on the animal, the camera being wire-connected or wireless-connected with the first radio set.

### BRIEF DESCRIPTION OF THE DRAWINGS

The above and other objects, advantages and features of the present invention will be more apparent from the following description taken in conjunction with the accompanying drawings in which:
Fig. 1 is a perspective view of an embodiment of the apparatus of the present invention for communicating with the animal;
Fig. 2 is a perspective view of a modification of the embodiment of the apparatus of the present invention shown in Fig. 1;
Fig. 3 is a perspective view of another modification of the embodiment of the apparatus of the present invention shown in Fig. 1; and
Fig. 4 is a perspective view of an embodiment of the method of the present invention for communicating with the animal.

### DETAILED DESCRIPTION OF THE PREFERRED EMBODIMENTS

The best modes for carrying out the present invention will be described in detail using embodiments of the present invention with reference to the accompanying drawings.

The present invention may, however, be embodied in various different forms and should not be construed as limited to the embodiments set forth herein; rather, these embodiments are provided so that this disclosure will be thorough and complete, and will fully convey the scope of the present invention to those skilled in the art.

A method of the present invention for communicating or telecommunicating with an animal is characterized in that a bone conduction speaker is fixedly mounted on a head of an animal such as a police dog, a search dog or the like. The police dog is mainly employed in tacking a fugitive criminal. On the other hand, the rescue dog is mainly employed in finding-out operation of a victim or missing in the site. The method of the present invention is also applicable to any other animal such as horses, apes, monkeys, dolphins and like intelligent animals, wherein these animals are capable of understanding man's language or voice tone to some extent.

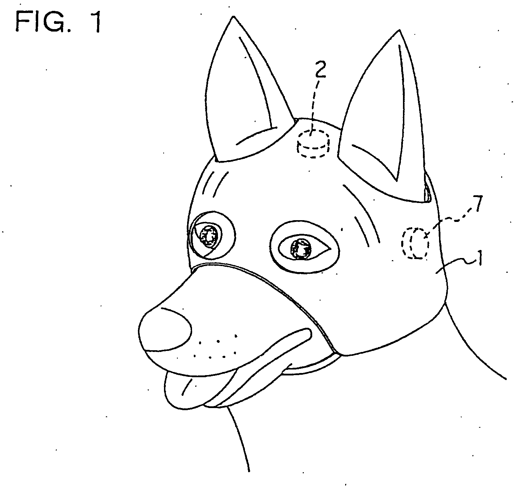

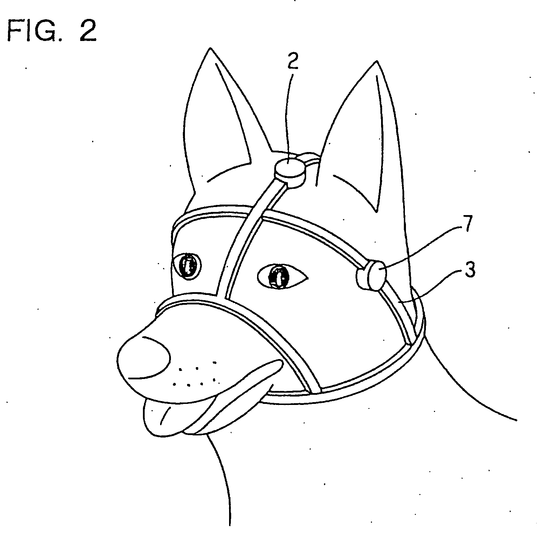

In use, the bone conduction speaker functions to convert man' s language or voice tone into a bone conduction sound which is transmitted to a head portion of the animal from a vibrating portion of the speaker, wherein such a vibrating portion is brought into close contact with the head portion of the animal. The bone conduction speaker is fixedly mounted on the head portion of the animal in an arbitrary manner. For example, when the animal is a dog, a mask 1, which is provided with five opening portions each corresponding in position to each of a pair of the dog's eyes, a pair of the dog's ears and the dog's mouth, is fixedly mounted on a head portion of the dog. More specifically, as shown in Fig. 1, a bone conduction speaker 2 is fixedly mounted on the top of the head portion of the dog by using the mask 1 in a manner such that a vibrating portion of the bone conduction speaker 2 is brought into close contact with the top of the head portion of the dog and fixed thereto. As is clear from Fig. 2, it is also possible for the bone conduction speaker 2 to have its vibrating portion fixedly mounted on the top of the head portion of the dog by using a head band 3 which surrounds the head portion of the dog. It is also possible to fixedly mount the bone conduction speaker 2 on any other portion of the dog other than its head portion.

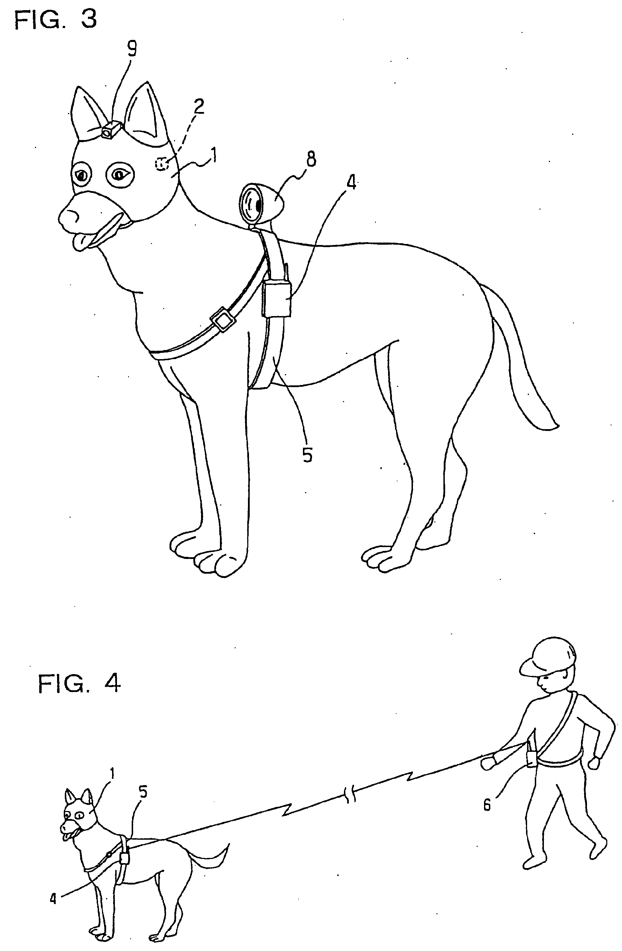

Fixedly mounted on the animal together with the bone conduction speaker 2 is a first radio set 4 which has a transmitting and a receiving function, as shown in Fig.3. As is clear from Fig. 3, The first radio set 4 is fixedly mounted on the animal through a jacket provided with a pocket for fixedly receiving the first radio set 4 therein. It is also possible to employ a harness 5 in fixedly mounting the first radio set 4 on the animal. In any case, since the radio set 4 mounted on the animal is subjected to severe mechanical vibrations in use, it is necessary for the first radio set 4 to be firmly and fixedly mounted on the animal.

On the other hand, it is necessary for man (i.e., an animal trainer or operator) to carry a second radio set 6, which corresponds in communication to the first radio set 4 carried by the animal. It is natural that each of the first radio set 4 and the second radio set 6 is of a portable type. In general, in communication or telecommunication between man and the animal, there is little need to transmit a signal to the second radio set 6 from the side of the first radio set 4 carried by the animal. In contrast with this, in the side of the second raid set 6, there is little need to receive a signal issued from the second raid set 4 carried by the animal. Consequently, the second radio set 6 having only the function for transmitting a signal or instruction substantially suffices for all needs in the side of man. On the other hand, in the side of the animal, the first radio set 4 having only the function for receiving a signal or instruction substantially suffices for all needs in the side of the animal.

In a modification of the above embodiment of the present invention, it is possible to additionally mount a microphone 7 on the animal, as shown in Figs. 1 and 2. The microphone 7 is of either a general type (i.e., electrodynamic type), a condenser type or a bone conduction type. The microphone 7 is fixedly mounted on either the mask 1 or the head band 2 in use, as shown in Figs. 1 and 2. when the microphone 7 is used, it is necessary to mount a sound transmitter on the animal. Instead of such a sound transmitter in use, It is also possible to use a modified one of the first radio set 4, which modified one has a transmitting function together with the receiving function.

When the general type (i.e., electrodynamic type) microphone 7 is mounted on a rescue dog, it is possible for a victim or missing in the site to telecommunicate with the outside through the microphone 7 carried by the rescue dog. On the other hand, when a bone conduction microphone 7 is mounted on a police dog, it is possible for a policeman to precisely grasp, through a tone in barking of the dog, the dog's feelings of fear or excitement in the site where the dog encounters the event and barks at someone or something which the dog finds out there.

It is also possible to mount a jacket or harness 5 on the animal, through which jacket or harness 5 a loudspeaker 8 is fixedly mounted on the animal, as shown in Fig. 3. In this case, it is possible for the rescue crew to speak to a victim of various matters including the crew's encouraging voice.

In another modification of the first embodiment of the method of the present invention, it is possible to mount a mini-sized camera 9 such as a CCD camera on the head portion of the animal, as shown in Fig. 3. In this case, it is possible for an animal trainer or operator to monitor in real time the site where the animal attends the event occurring there. Further, in order to identify the animal' location, it is also possible to utilize a suitable positioning system such as a GPS system and the like in the method and the apparatus of the present invention.

In the method and apparatus of the present invention each having the above construction for communicating or telecommunicating with the animal, it is possible for an animal trainer or operator to identify the animal's location and transfer his instruction to the animal and control it without fail, even when the animal goes out of the range of the trainer' s or operator' s voice and/or encounters a very noisy environment during its tracking, searching and like work conducted in a remote location.

## Claims

1. A method for communicating with an animal comprising the steps of:
mounting a bone conduction speaker on an animal together with a radio set having at least a receiving function; and
transferring an instruction to said animal through said bone conduction speaker.

2. The method for communicating with the animal as set forth in claim 1, wherein a microphone is additionally mounted on said animal.

3. The method for communicating with the animal as set forth in claim 1, wherein a loudspeaker is additionally mounted on said animal.

4. The method for communicating with the animal as set forth in any one of claims 1 to 3, wherein a camera is additionally mounted on said animal.

5. An apparatus for communicating with an animal comprising:
a bone conduction speaker mounted on an animal;
a first radio set mounted on said animal together with said bone conduction speaker, said first radio set having at least a receiving function;
a second radio set carried by a person, said second radio set having at least a transmitting function.

6. The apparatus for communicating with the animal as set forth in claim 5, wherein the apparatus further comprises a microphone additionally mounted on said animal.

7. The apparatus for communicating with the animal as set forth in claim 5, wherein the apparatus further comprises a loudspeaker additionally mounted on said animal.

8. The apparatus for communicating with the animal as set forth in any one of claims 5 to 7, wherein the apparatus further comprises a camera additionally mounted on said animal.
